# EUROPEAN PATENT SPECIFICATION

(11) **EP 2 888 133 B1**
(45) Date of publication and mention of the grant of the patent: **09.08.2017**
(21) Application number: 13748325.1
(22) Date of filing: 14.08.2013
(51) Int. Cl.: B60R 11/04, H04N 5/225

(54) **VEHICLE CAMERA WITH INTEGRATED HF ANTENNA AND MOTOR VEHICLE**
FAHRZEUGKAMERA MIT INTEGRIERTER HF-ANTENNE UND KRAFTFAHRZEUG
CAMÉRA DE VÉHICULE ÉQUIPÉE D'UNE ANTENNE HF INTÉGRÉE ET VÉHICULE MOTORISÉ

(30) Priority: 25.08.2012 DE 102012016862
(43) Date of publication of application: 01.07.2015
(73) Proprietor: Connaught Electronics Ltd., Tuam, County Galway (IE)
(72) Inventor: WARD, Enda Peter, Corofin County Galway (IE)
(74) Representative: Jauregui Urbahn, Kristian
(86) International application number: PCT/EP2013/066991
(87) International publication number: WO 2014/032976

(56) References cited:
- DE-A1- 10 339 901
- JP-A- 2005 306 266
- US-A1- 2003 137 588
- US-A1- 2005 179 774
- US-A1- 2008 266 397

## Description

The invention relates to a camera for a motor vehicle including a housing for installation on and/or in the motor vehicle as well as including a lens disposed on and/or in the housing. The camera also includes a communication device for wireless communication with an external apparatus. The communication device has an antenna formed for emitting and/or receiving electromagnetic communication signals. Furthermore, the invention relates to a motor vehicle with such a camera.

Camera systems for motor vehicles are already known from the prior art in various configuration. For example, it is prior art to employ a plurality of video cameras with a motor vehicle, which then capture the entire environment around the motor vehicle. In addition, it is known to employ only a so-called "rear view" camera, which captures the environmental region behind the motor vehicle. The captured images can then be displayed on a display in the interior of the motor vehicle such that the driver is assisted in driving the motor vehicle. If plural cameras are employed, thus, a plan view presentation (so-called "bird eye view") can also be produced, which shows a plan view of the motor vehicle as well as its environment from a bird's eye view. Such a plan view can also be displayed on the display.

Presently, the interest is directed to a camera system, in which at least one camera - in particular a video camera - wirelessly communicates with a controller of the motor vehicle or else directly with a display. Such cameras having a communication device for wireless data communication are already prior art. For example, from the document US 2009/0244282 A1, a camera system for a motor vehicle is known, in which a display can be upgraded with a communication apparatus afterwards, in order to wirelessly communicate with several cameras disposed distributed on the motor vehicle. The communication apparatus can be reversibly detachably connected to the display and also allows switching of the display between a real-time image mode as well as a normal mode.

The document US 7 068 227 B2 describes a portable communication apparatus with an integrated camera as well as an antenna. Therein, the antenna is disposed on a lens of the camera. For example, here, it is provided that the antenna is designed as a helical antenna, which is wrapped around the cylindrical lens of the camera. Document JP2005306266 discloses a camera according to the preamble of claim 1. In the development of cameras for motor vehicles, there is a great challenge in configuring the camera and thus also the communication device of the camera such that the camera can be employed in different types of vehicles as well as in vehicles of different manufacturers without having to develop different types of cameras. Often, it is required to employ different antennas or antenna shapes for different motor vehicles. This is associated with the disadvantage that the development as well as the manufacture of the cameras are relatively expensive and additionally the provision of a unitary camera often is also not possible due to the different types of antennas and thus due to the different geometric shapes of the antennas. With different types of antennas, then, different problems with respect to the electromagnetic compatibility (electromagnetic interference) also arise. Thus, the internal components of the camera - such as for example the image sensor or else a microcontroller - are exposed to the electromagnetic radiation of the antenna to different extent such that different measures have to be taken respectively for shielding the electronic components. In the present cameras with integrated antennas, there is a further disadvantage in that the examination of the antenna and/or the feeding circuit of the antenna for its operation is associated with relatively great effort because the antenna can only difficultly be contacted with a test tool.

It is an object of the invention to provide a camera with an integrated antenna improved with respect to the prior art.

According to the invention, this object is solved by a camera as well as by a motor vehicle having the features according to the respective independent claims. Advantageous implementations of the invention are the subject matter of the dependent claims, of the description and of the figures.

A camera according to the invention for a motor is defined in claim 1. The arrangement of the antenna according to the invention has diverse advantages: The shape of the antenna can be adapted for very different applications without much effort, without the entire camera having to be altered in expensive manner. To this, optionally, only a region of the housing has to be reconfigured. Because the antenna is attached on an outer surface of the housing, it as well as the feeding path of the antenna can be checked for the operation without much effort for example by providing a test pad or a corresponding connecting area on the housing. Not least, advantages with respect to the electromagnetic compatibility also arise in the camera according to the invention. Thus, the interior of the camera can be shielded against the electromagnetic radiation of the antenna in particularly simple manner, if for example a corresponding shielding element is disposed between the housing wall and a circuit board. Because the remaining electronic components of the camera can additionally be disposed in the housing - for example on a circuit board - the antenna is disposed on a separate housing wall and thus inherently decoupled from the electronic components such that low influence of the electronic components by the electromagnetic radiation of the antenna inherently results. In addition, the camera according to the invention also has advantages with regard to the configuration of the directional characteristic of the antenna, because electronic components of the camera cannot influence the directional characteristic of the antenna. In addition, the shape of the antenna is not restricted to a specific shape of the lens.

The communication device and thus the antenna are preferably formed for data communication according to the WiFi communication standard (WLAN) and/or according to the energy saving Bluetooth communication standard (Bluetooth Low Energy) and/or according to the Zigbee communication standard. For example, it can be provided that the WiFi communication standard is used for transmitting image data, while the Bluetooth communication standard is used for transmitting control commands for switching the camera between a standby operating mode and an active mode.

Preferably, the camera is a video camera being able to capture a plurality of frames per second and thus a video. Therein, for example, an image sensor can be disposed in the camera housing, which can be a CMOS sensor or else a CCD sensor. Besides the image sensor, a microcontroller can also be provided in the camera housing, which serves for conditioning the captured images as well as for communicating the conditioned images to the external apparatus via the communication device.

Thus, the camera can be formed for transmitting the captured sequence of images to the external apparatus via the communication device and thus via the antenna, which is for example a controller or else a display of the motor vehicle. The camera can also be adapted to receive control commands from the external apparatus via the antenna and to switch between a standby mode and an active mode due to these control commands. According to the invention, at least one said antenna is arranged on an outer surface of the housing, which faces away from the interior of the housing. Thus, the propagation of the waves is not influenced by the material of the housing.

Additionally at least one said antenna can be arranged on an inner surface of the housing, which faces towards the interior of the housing. Thus, this antenna can be protected by the wall of the housing from external influences, such as chemicals, humidity etc. Furthermore, no external connections for this antenna need to be provided through the wall of the housing.

It proves particularly advantageous if the antenna is a planar antenna, which is attached resting against the surface of the housing. This means that the antenna can be provided in planar technology and therefore can be formed in the form of particularly thin conductor paths on the housing. Therein, the antenna can be a MID antenna, in particular a 3D MID antenna, and therefore be applied to the injection molded housing as metallic conductor paths. In particular, the planar technology has the advantage that such a planar antenna can be adapted to the respectively preset requirements with respect to the directional characteristic without much effort. In addition, such an antenna takes up particularly little installation space such that the valuable installation space in the motor vehicle can be saved. Furthermore, with a planar antenna in connection with the special arrangement on the - outer and/or inner - surface of the housing, a particularly good efficiency of the antenna results, and the losses are minimum.

Alternatively, it can also be provided that the antenna is formed as an SMD component disposed on the housing.

Preferably, the housing is formed of dielectric material at least in the region of the antenna and therein serves as a dielectric substrate of the antenna. This in particular implies that the metallic antenna directly rests against a housing wall such that this housing wall quasi constitutes a substrate or a circuit board for supporting the antenna. Thus, the employment of an additional substrate with the disadvantages associated therewith is unnecessary. Namely, the housing wall takes over two different functions, namely the function of covering the housing interior on the one hand as well as the function of a dielectric on the other hand.

In a preferred embodiment, it is provided that the lens is disposed on a front side of the housing and the antenna is disposed on the - outer and/or inner - surface of a backside or a rear wall of the housing, which opposes the front side. While the lens therefore points at a capturing direction of the camera, the antenna thus points at an opposite direction. Therein, the rear wall of the housing preferably extends perpendicularly to a longitudinal axis of the lens and thus to the capturing direction of the camera. The rear wall can also be formed in the form of a lid, by means of which the housing is covered or closed from the backside. It can also be provided that the antenna is exclusively disposed on the rear wall of the housing such that the remaining housing walls are free from the antenna. It can also be provided that exclusively the antenna or exclusively multiple antennas is/are disposed on the housing such that the outer surface of the housing is free from further electronic components. The arrangement of the antenna on the rear wall of the housing has the advantage that this backside usually faces the interior of the motor vehicle such that the directional characteristic of the antenna is oriented to the communication partners and thus reliable data communication is possible without having to employ special antenna shapes. In addition, the antenna on the rear wall of the housing can be adapted to different specific requirements of the respective vehicles with lowest effort. Thus, optionally, only the rear wall of the housing - in particular in the form of a lid - optionally has to be vehicle-specific designed in order that the desired characteristic of the antenna can be achieved. Because this rear wall is disposed in a larger distance to the lens, the lens does not have to be reconfigured in expensive manner.

Preferably, at least two - in particular planar - antennas are disposed on the surface of the housing. Thus, data communication can be performed according to at least two different communication standards, namely for example according to the WiFi communication standard as well as according to the Bluetooth communication standard. Therein, different communication standards can be used for different purposes. According to the invention, it is provided that a flat electrical connector is disposed resting against an inner surface of the housing - in particular the rear wall of the housing - facing away from the antennas and facing the interior of the housing, which is electrically coupled to the antenna through a via element for feeding the antenna, which extends through the wall of the housing. Thus, by the via element, electrical connection between the antenna on the one hand and the inner surface of the housing on the other hand is allowed, while the flat connector - for example in the form of a pad - ensures the connection of the via element and thus of the antenna to the internal electronic components of the camera. Namely, with such a flat connector resting against the inner surface of the housing wall, the feeding of the antenna can be realized with the aid of a spring-loaded pin without much effort.

A circuit board can also be disposed in the housing, which is also provided with such a flat connector, which is located on the housing overlapping with the connector. The connector of the circuit board can be electrically coupled to the connector of the housing via a connecting pin for feeding the antenna. Therein, the connecting pin is preferably spring-loaded such that an always operationally reliable electrical connection is ensured. Preferably, the circuit board is disposed parallel to the housing wall, on which the antenna is disposed. Thus, the circuit board is preferably disposed parallel to the rear wall of the housing. The mentioned connecting pin can also be soldered to the corresponding flat connector at least on one side. Two such connecting pins can also be provided, namely a first connecting pin for the useful signals and for feeding the antenna as well as a second connecting pin for ground.

Concerning the configuration of the antenna, various embodiments can be provided, wherein the invention is not restricted to a certain antenna shape:
In an embodiment, a meander line antenna can be provided as the antenna, which is disposed on the outer and/or inner surface of the housing. Such an antenna can be adapted to the respective requirements without much effort. In addition, such an antenna allows wideband data communication depending on how many meander loops are employed.

Additionally or alternatively, an inverted F antenna can be used as the antenna.

Furthermore, additionally or alternatively, a simple patch antenna can be employed as the antenna.

Between the housing wall, on which the antenna is disposed, and the circuit board disposed in the housing, a shielding element can also be disposed, by means of which the circuit board is shielded against electromagnetic radiation of the antenna. Thus, the electronic components of the camera are effectively protected from the electromagnetic radiation.

The invention also relates to a motor vehicle with a camera according to the invention as well as with an apparatus separate from the camera, for example a controller and/or a display, which is formed for wireless communication with the communication device of the camera. The camera can for example be disposed in the rear region or else in the front region of the motor vehicle and capture an environmental region behind the motor vehicle or else in front of the motor vehicle. The camera can also be disposed in a lateral exterior mirror. Multiple cameras according to the invention can also be employed in the motor vehicle, which are disposed distributed on the motor vehicle and capture the entire environment around the motor vehicle as a whole.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on individual preferred embodiments as well as with reference to the attached drawings. It is emphasized that the embodiments described below only represent preferred embodiments of the invention and the invention is therefore not restricted to these exemplary embodiments.

There show:
- Fig. 1: in schematic and perspective illustration a camera according to a first embodiment of the invention;
- Fig. 2: in schematic illustration a sectional view through a camera according to an embodiment of the invention;
- Fig. 3: in schematic and perspective illustration a rear wall of a housing as well as a circuit board of a camera according to an embodiment of the invention; and
- Fig. 4: in schematic and perspective illustration a rear wall and a circuit board of a camera according to an embodiment of the invention.

In the figures, identical or functionally identical elements are provided with the same reference characters.

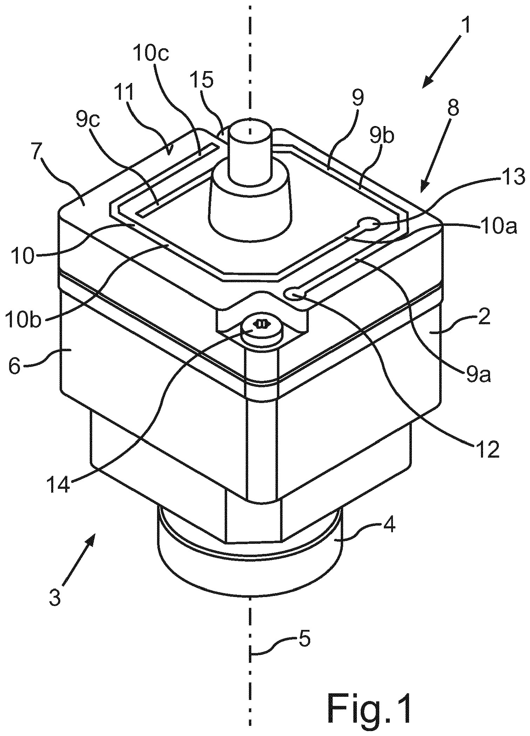

A camera 1 illustrated in Fig. 1 is formed for installation or for incorporation in a motor vehicle, namely in a passenger car. The camera 1 has a housing 2, from which an optical lens protrudes on a front side 3, which has an optical longitudinal axis 5, which at the same time also constitutes a longitudinal axis of the camera 1. The camera 1 can capture images via the lens 4.

In the embodiment, the housing 2 is overall composed of two parts, namely a base body 6, in which the main components of the camera 1 are disposed, as well as a lid 7, by means of which the housing 2 is closed from a back side 8 opposing the front side 3. The lid 7 also constitutes a rear wall of the housing 2, which faces away from the lens 4.

In addition, the camera 1 has a communication device, which is formed for wireless communication with an external apparatus thus separate from the camera 1. Therein, a first antenna 9 as well as a second antenna 10, which are disposed on an outer surface 11 of the lid 7 or the rear wall 7, belong to the communication device. Both antennas 9, 10 are formed as planar antennas, which are applied to the outer surface 11 of the rear wall 7 in planar technology - in particular in MID technology. In the embodiment according to Fig. 1, the two antennas 9, 10 are configured as micro-strip antennas and each have three straight sections 9a to 9c and 10a to 10c, respectively, which are U-shaped connected to each other. Therein, the transitional regions between the respective sections 9a to 9c and 10a to 10c, respectively, are designed in the form of flattened corners. At the free end of the respective antennas 9, 10, a test pin 12, 13 is respectively provided, via which the respective antenna 9, 10 can be checked for their functionality.

For example, the lid 7 is connected to the base body 6 of the housing 2 through fasteners 14, 15 - for example in the form of screws.

The shape of the antennas 9, 10 shown in Fig. 1 is merely exemplary and can be different according to embodiment.

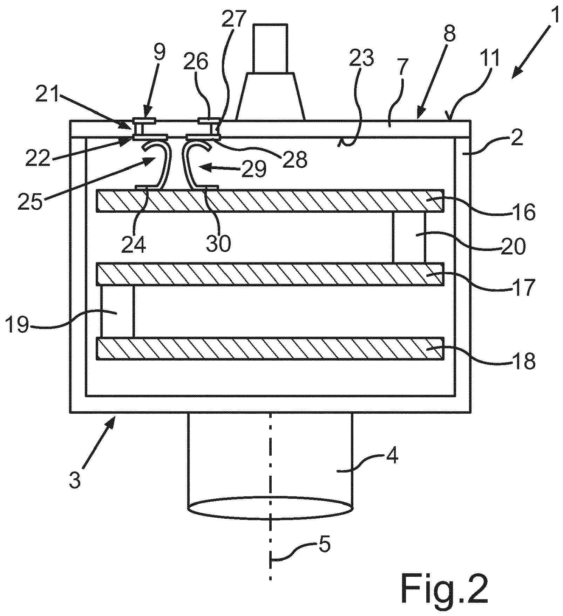

In Fig. 2, a sectional illustration through a camera 1 is shown. Here, the rectangular configuration of the base body 6 of the housing 2 is recognizable, which is closed from the backside 8 with the aid of the lid 7. Here, in the interior of the housing 2, overall three circuit boards 16, 17, 18 are disposed, which are disposed parallel to each other as well as parallel to the plate-shaped rear wall 7. Electronic components of the camera 1 can be disposed on the circuit boards 16, 17, 18 such as for example an image sensor, a microcontroller, an analog-digital converter and the like. A transmitter and/or receiver of the mentioned communication device can also be located on one of the circuit boards 16, 17, 18. The circuit boards 16, 17, 18 are connected to each other via connecting elements 19,20.

In the embodiment, the rear wall 7 of the housing 2 is formed plate-shaped and flat. At least one antenna 9 - optionally with a test pad - is disposed on the outer surface 11, which is electrically connected to a flat connector 22 through a via element 21, which rests against an inner surface 23 of the rear wall 7 facing the interior of the housing 2. Thus, the connector 22 presents an electrical connection area or a connection pad and is coupled to the antenna 9 through the via element 21 such that the antenna 9 can be supplied through the via element 21 as well as through the connector 22. A corresponding flat connector 24 is also provided on the circuit board 16 closest to the rear wall 7, which is electrically coupled to the connector 22 of the rear wall 7 via an electrical connecting pin 25. The connecting pin 25 is in particular formed resiliently and is spring-loaded between the circuit board 16 on the one hand and the rear wall 7 on the other hand. The connecting pin 25 is soldered to the corresponding connector 22 and/or 24 at least on one side. On the other hand, the connecting pin 25 can be simply supported on the other connector 22 and/or 24.

Depending on the used antenna shape, it can also be required to provide a ground area 26 for the antenna 9 on the outer surface 11 of the rear wall 7. The ground area 26 too can be coupled to a flat connector 28 through a via element 27, which rests against the inner surface 23. Here too, a spring-loaded connecting pin 29 can be provided, via which the connector 28 is connected to a connector 30 on the circuit board 16. Therein, the reference potential (ground) is provided on this connector 30.

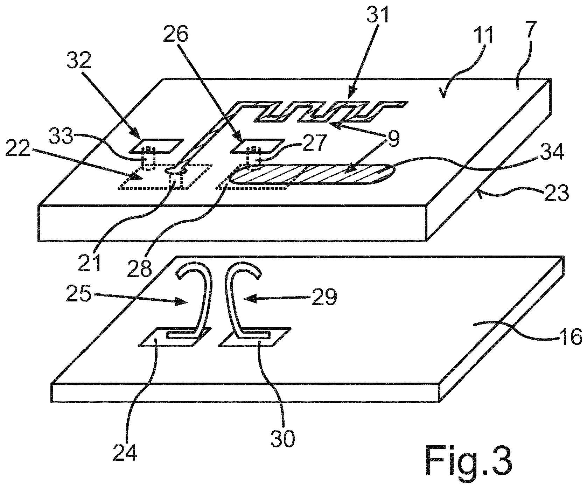

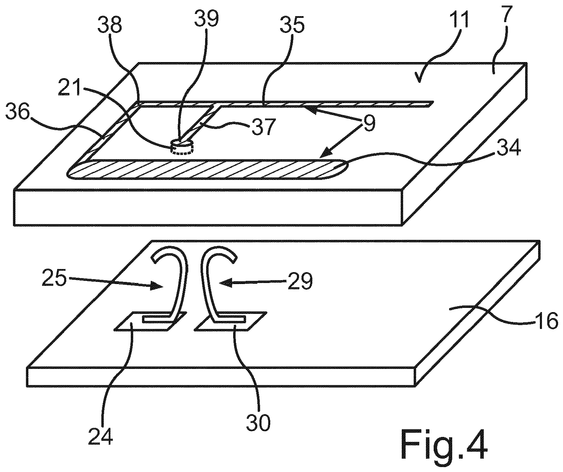

In Fig. 3 and 4, now, different shapes of the antenna 9 are illustrated in more detail. With reference to Fig. 3, the antenna 9 can be configured as a meander line antenna, which can have several meander loops 31. The meander-shaped antenna 9 is connected to the connector 22 through the via element 21, which is disposed on the inner surface 23 of the rear wall 7. The antenna 9 is fed through the via element 21.

It can also be provided that a test pad 32 in the form of a flat element is provided on the outer surface 11, which serves for checking the antenna 9 or else the feeding path of the antenna 9 for functionality. This test pad 32 is coupled to the connector 22 through a via element 33 such that the useful signal or the feeding signal of the antenna 9 is provided on the test pad 32.

Optionally, the test pad 32 - similarly to Fig. 1 - can be formed integrally with the antenna 9 such that a via element is unnecessary.

In the embodiment according to Fig. 3, a ground area 34, which optionally can be formed integrally with the ground area 26 or coupled to this ground area 26, additionally belongs to the antenna 9. Therein, this ground area 34 rests against the outer surface 11 of the rear wall 7.

In diverse embodiments, it can also be provided that a shielding element (not illustrated in the figures) can be disposed between the rear wall 7 and the circuit board 16, by means of which the electronic components of the camera 1 are shielded from the electromagnetic radiation of the antenna 9. This shielding element can for example be provided in the form of a ground area on the inner surface 23 of the rear wall 7.

A further embodiment of the antenna 9 is illustrated in more detail in Fig. 4. Here, the antenna 9 is designed as an inverted F antenna, namely in planar technology. Here, the antenna 9 includes a main antenna element 35 formed as a linearly extending micro-strip line. Two antenna arms 36, 37 protrude at a right angle from the antenna main element 35. Therein, the first antenna arm 36 extends from an end 38 of the main antenna element 35 and a ground area 34. This antenna arm 36 thus connects the main antenna element 35 to the ground area 34. In comparison, the second antenna arm 37 is shorter than the first antenna arm 36 and is disposed in a distance from the ground area 34. A free end 39 of the second antenna arm 37 constitutes a connection area, which is coupled to the circuit board 16 through the via element 21, as described above in more detail. This connection area or the free end 39 can optionally also serve as a test pad.

As a whole, the antenna 9 can take up an area of about 8 mm x 11 mm. Depending on the respective requirements to the directional characteristic as well as the impedance matching, different shapes of the antenna 9 can be selected.

## Claims

1. Camera (1) for a motor vehicle, including a housing (2) for installation on and/or in the motor vehicle, including a lens (4) disposed on and/or in the housing (2), including a communication device for wireless communication with an external apparatus, wherein the communication device has an antenna (9, 10), which is formed for emitting and/or receiving electromagnetic communication signals,
**characterized in that**
the antenna (9, 10) is disposed on an outer surface (11) of the housing (2) and a flat electrical connector (22) is disposed resting against an inner surface (23) of the housing (2) facing away from the antenna (9, 10), which is electrically coupled to the antenna (9, 10) through a via element (21) extending through a wall (7) of the housing (2) for feeding the antenna (9, 10).

2. Camera (1) according to claim 1,
**characterized in that**
at least one antenna (9, 10) is disposed on an inner surface of the housing (2), which faces towards the interior of the housing (2).

3. Camera (1) according to anyone of the preceding claims,
**characterized in that**
the antenna (9, 10) is a planar antenna, which is attached resting against the surface (11) of the housing (2).

4. Camera (1) according to anyone of the preceding claims,
**characterized in that**
at least in the region of the antenna (9, 10), the housing (2) is formed of a dielectric material and is used as a dielectric substrate of the antenna (9, 10).

5. Camera (1) according to anyone of the preceding claims,
**characterized in that**
the lens (4) is disposed on a front side (3) of the housing (2) and the antenna (9, 10) is disposed on the, in particular outer, surface (11) of a rear wall (7) of the housing (2) opposing the front side (3), in particular is exclusively disposed on the rear wall (7).

6. Camera (1) according to anyone of the preceding claims,
**characterized in that**
at least two antennas (9, 10) are disposed on the surface (11) of the housing (2).

7. Camera (1) according to anyone of the preceding claims,
**characterized in that**
in the housing (2), a circuit board (16) with a flat connector (24) is disposed, which is electrically coupled to the connector (22) of the housing (2) via an, in particular spring-loaded, connecting pin (25) for feeding the antenna (9, 10).

8. Camera (1) according to anyone of the preceding claims,
**characterized in that**
as antenna (9, 10), a meander line antenna is disposed on the surface (11) of the housing (2).

9. Camera (1) according to anyone of the preceding claims,
**characterized in that**
as antenna (9, 10), an inverted-F antenna is disposed on the surface (11) of the housing (2).

10. Camera (1) according to anyone of the preceding claims,
**characterized in that**
between a housing wall (7), on which the antenna (9, 10) is disposed, and a circuit board (16) disposed in the housing (2), a shielding element is disposed, by means of which the circuit board (16) is shielded against electromagnetic radiation of the antenna (9, 10).

11. Motor vehicle with a camera (1) according to anyone of the preceding claims and with an apparatus separate from the camera (1), which is formed for wireless communication with the communication device of the camera (1).

## Patentansprüche

1. Kamera (1) für ein Kraftfahrzeug, die ein Gehäuse (2) zur Installation an und/oder in dem Kraftfahrzeug enthält, die eine Linse (4), die an und/oder in dem Gehäuse (2) angeordnet ist, enthält, die eine Kommunikationsvorrichtung zur drahtlosen Kommunikation mit einer externen Vorrichtung enthält, wobei die Kommunikationsvorrichtung eine Antenne (9, 10) aufweist, die zum Emittieren und/oder Empfangen elektromagnetischer Kommunikationssignale ausgebildet ist, **dadurch gekennzeichnet, dass**
die Antenne (9, 10) an einer Außenfläche (11) des Gehäuses (2) angeordnet ist und ein flacher elektrischer Verbinder (22) gegen eine Innenfläche (23) des Gehäuses (2), die von der Antenne (9, 10) abgewandt ist, ruhend angeordnet ist, der zum Speisen der Antenne (9, 10) über ein Durchgangselement (21), das sich durch eine Wand (7) des Gehäuses (2) erstreckt, elektrisch an die Antenne (9, 10) gekoppelt ist.

2. Kamera (1) nach Anspruch 1, **dadurch gekennzeichnet, dass**
die wenigstens eine Antenne (9, 10) an einer Innenfläche des Gehäuses (2), die dem Inneren des Gehäuses (2) zugewandt ist, angeordnet ist.

3. Kamera (1) nach einem der vorhergehenden Ansprüche, **dadurch gekennzeichnet, dass**
die Antenne (9, 10) eine planare Antenne ist, die an der Oberfläche (11) des Gehäuses (2) ruhend befestigt ist.

4. Kamera (1) nach einem der vorhergehenden Ansprüche, **dadurch gekennzeichnet, dass**
wenigstens in dem Bereich der Antenne (9, 10) das Gehäuse (2) aus einem dielektrischen Material ausgebildet ist und als ein dielektrisches Substrat der Antenne (9, 10) verwendet wird.

5. Kamera (1) nach einem der vorhergehenden Ansprüche, **dadurch gekennzeichnet, dass**
die Linse (4) an einer Vorderseite (3) des Gehäuses (2) angeordnet ist und die Antenne (9, 10) an der, insbesondere der äußeren, Oberfläche (11) einer Rückwand (7) des Gehäuses (2), die der Vorderseite (3) gegenüberliegt, angeordnet ist, insbesondere ausschließlich an der Rückwand (7) angeordnet ist.

6. Kamera (1) nach einem der vorhergehenden Ansprüche, **dadurch gekennzeichnet, dass**
wenigstens zwei Antennen (9, 10) an der Oberfläche (11) des Gehäuses (2) angeordnet sind.

7. Kamera (1) nach einem der vorhergehenden Ansprüche, **dadurch gekennzeichnet, dass**
in dem Gehäuse (2) eine Leiterplatte (16) mit einem flachen Verbinder (24) angeordnet ist, der zum Speisen der Antenne (9, 10) über einen, insbesondere federbelasteten, Verbindungsstift (25) elektrisch an den Verbinder (22) des Gehäuses (2) gekoppelt ist.

8. Kamera (1) nach einem der vorhergehenden Ansprüche, **dadurch gekennzeichnet, dass**
als die Antenne (9, 10) eine Mäanderlinienantenne an der Oberfläche (11) des Gehäuses (2) angeordnet ist.

9. Kamera (1) nach einem der vorhergehenden Ansprüche, **dadurch gekennzeichnet, dass**
als die Antenne (9, 10) eine invertierte F-Antenne an der Oberfläche (11) des Gehäuses (2) angeordnet ist.

10. Kamera (1) nach einem der vorhergehenden Ansprüche, **dadurch gekennzeichnet, dass**
zwischen einer Gehäusewand (7), an der die Antenne (9, 10) angeordnet ist, und einer Leiterplatte (16), die in dem Gehäuse (2) angeordnet ist, ein Abschirmelement angeordnet ist, mittels dessen die Leiterplatte (16) gegen die elektromagnetische Strahlung der Antenne (9, 10) abgeschirmt wird.

11. Kraftfahrzeug mit einer Kamera (1) nach einem der vorhergehenden Ansprüche und mit einer von der Kamera (1) separaten Vorrichtung, die zur drahtlosen Kommunikation mit der Kommunikationsvorrichtung der Kamera (1) ausgebildet ist.

## Revendications

1. Caméra (1) pour un véhicule à moteur, comportant un boîtier (2) pour installation sur et/ou dans le véhicule à moteur, comportant une lentille (4) disposée sur et/ou dans le boîtier (2), comportant un dispositif de communication pour une communication sans fil avec un appareil externe, le dispositif de communication ayant une antenne (9, 10) qui est formée pour émettre et/ou recevoir des signaux de communication électromagnétiques, **caractérisée en ce que**
l'antenne (9, 10) est disposée sur une surface extérieure (11) du boîtier (2) et un connecteur électrique plat (22) est disposé appuyé contre une surface intérieure (23) du boîtier (2) tournant le dos à l'antenne (9, 10), lequel est électriquement couplé à l'antenne (9, 10) par le biais d'un élément à trou d'interconnexion (21) s'étendant à travers une paroi (7) du boîtier (2) pour alimenter l'antenne (9, 10).

2. Caméra (1) selon la revendication 1, **caractérisée en ce que**
au moins une antenne (9, 10) est disposée sur une surface intérieure du boîtier (2), laquelle est tournée vers l'intérieur du boîtier (2).

3. Caméra (1) selon l'une quelconque des revendications précédentes, **caractérisée en ce que**
l'antenne (9, 10) est une antenne planaire, qui est attachée appuyée contre la surface (11) du boîtier (2).

4. Caméra (1) selon l'une quelconque des revendications précédentes, **caractérisée en ce que**
au moins dans la région de l'antenne (9, 10), le boîtier (2) est constitué d'un matériau diélectrique et est utilisé comme un substrat diélectrique de l'antenne (9, 10).

5. Caméra (1) selon l'une quelconque des revendications précédentes, **caractérisée en ce que**
la lentille (4) est disposée sur une face avant (3) du boîtier (2) et l'antenne (9, 10) est disposée sur la surface, en particulier extérieure (11) d'une paroi arrière (7) du boîtier (2) à l'opposé de la face avant (3), en particulier est exclusivement disposée sur la paroi arrière (7).

6. Caméra (1) selon l'une quelconque des revendications précédentes, **caractérisée en ce que**
au moins deux antennes (9, 10) sont disposées sur la surface (11) du boîtier (2).

7. Caméra (1) selon l'une quelconque des revendications précédentes, **caractérisée en ce que**
dans le boîtier (2) est disposée une carte de circuit (16) avec un connecteur plat (24), lequel est électriquement couplé au connecteur (22) du boîtier (2) par le biais d'une broche de connexion, en particulier à ressort (25) pour alimenter l'antenne (9, 10).

8. Caméra (1) selon l'une quelconque des revendications précédentes, **caractérisée en ce que**
comme antenne (9, 10), une antenne à méandres est disposée sur la surface (11) du boîtier (2).

9. Caméra (1) selon l'une quelconque des revendications précédentes, **caractérisée en ce que**
comme antenne (9, 10), une antenne en F inversé est disposée sur la surface (11) du boîtier (2).

10. Caméra (1) selon l'une quelconque des revendications précédentes, **caractérisée en ce que**
entre une paroi de boîtier (7) sur laquelle est disposée l'antenne (9, 10) et une carte de circuit (16) disposée dans le boîtier (2), est disposé un élément de protection au moyen duquel la carte de circuit (16) est protégée du rayonnement électromagnétique de l'antenne (9, 10).

11. Véhicule à moteur avec une caméra (1) selon l'une quelconque des revendications précédentes et avec un appareil séparé de la caméra (1), lequel est formé pour une communication sans fil avec le dispositif de communication de la caméra (1).
